# FASCICULE DE BREVET EUROPEEN

(11) **EP 0 809 385 B1**
(45) Date de publication et mention de la délivrance du brevet: **18.02.2004**
(21) Numéro de dépôt: 97401126.4
(22) Date de dépôt: 22.05.1997
(51) Int. Cl.: H04M 1/00

(54) **Dispositif d'interface homme-machine pour terminal téléphonique**
Benutzerschnittstelle für ein Telefonendgerät
User interface for a telephone terminal

(30) Priorité: 24.05.1996 FR 9606502
(43) Date de publication de la demande: 26.11.1997
(73) Titulaire: ALCATEL, 75008 Paris (FR)
(72) Inventeur: Liot, Patrick, 75016 Paris (FR); Pinault, Francis, 92270 Bois Colombes (FR); Vasnier, Frédéric, 92700 Colombes (FR)
(74) Mandataire: El Manouni, Josiane

(56) Documents cités:
- EP-A- 0 695 072
- WO-A-96/02049
- DE-A- 19 534 789
- FR-A- 2 731 578
- GB-A- 2 162 393
- GB-A- 2 285 897
- US-A- 5 386 460

## Description

La présente invention concerne un dispositif d'interface homme-machine pour terminal de télécommunications.

Un terminal de télécommunications comporte d'une manière générale,outre des moyens de communication permettant à l'utilisateur de communiquer au moyen de ce terminal,une interface homme-machine comportant elle-même des moyens permettant à l'utilisateur d'introduire des données de commande de ce terminal,notamment un clavier permettant d'introduire la numérotation nécessaire à l'établissement des communications.

Des données de commande peuvent aussi,lors de l'accès à certains services dits interactifs,tels que par exemple des services faisant intervenir des serveurs fournissant des informations vocales enregistrées, être introduites en cours de communication,en réponse à différentes options proposées à l'utilisateur lors de l'accès à ces services.

Il est connu d'introduire de telles données de commande au moyen de touches de numérotation du clavier permettant de commander la génération de signaux multi-fréquences, la correspondance entre les différentes options proposées et ces différentes touches étant indiquée dans un message d'aide transmis à l'utilisateur,sous forme textuelle ou vocale.

Cette façon de procéder a pour inconvénient de ne pas être optimale car l'écoute ou la lecture de tels messages d'aide constitue une opération fastidieuse pour l'utilisateur, entraînant en outre une grande perte de temps ,et introduisant de plus un niveau de complexité supplémentaire pour l'utilisateur,à savoir la nécessité d'établir une correspondance entre une option à sélectionner et une touche de numérotation à activer.

Il est aussi connu, pour éviter ces inconvénients, de munir le clavier du terminal de touches spécifiques, dites aussi "soft keys" en anglais, et de sélectionner une option par appui sur celle de ces touches en face de laquelle s'affiche, sur un écran, un texte correspondant à cette option.

Une telle solution est décrite dans le document "ADSI:A new age of interactive services" J.Brad Johns, 7th World Telecommunication Forum, Telecom 95 Genève, vol.1, p.405-408.

Cependant, dans cette solution, le mode de présentation desdites options à l'utilisateur est déterminé dans l'extrémité distante (serveur ou commutateur) et non dans le terminal lui-même.

Par ailleurs, le document DE 195 34 789 A1 décrit une interface homme-machine qui permet à l'utilisateur d'un terminal de sélectionner deux modes de présentations différents (long ou court) pour la sélection d'options dans un menu lors de l'utilisation de services distants interactifs

Ainsi, dans une de ces solutions connues comme dans l'autre, le mode de présentation desdites options à l'utilisateur est déterminé dans cette extrémité distante, ce qui a essentiellement pour inconvénient de ne pas autoriser de différence de mode de présentation d'un terminal à un autre.

Or, suivant l'ergonomie du terminal, ou tout simplement suivant les préférences de l'utilisateur, un mode de présentation peut se révéler plus adapté qu'un autre, pour un meilleur confort d'utilisation.

La présente invention a notamment pour but d'éviter ces inconvénients.

La présente invention a ainsi pour objet un dispositif d'interface homme-machine pour terminal téléphonique selon la revendication 1.

D'autres objets et caractéristiques de la présente invention apparaîtront à la lecture de la description suivante d'exemples de réalisation, faite en relation avec les dessins ci-annexés, dans lesquels:
- la figure 1 est un schéma général d'un exemple de réalisation d'un dispositif d'interface homme-machine suivant l'invention,
- la figure 2 est un schéma destiné à illustrer un exemple de mode de présentation suivant l'invention.

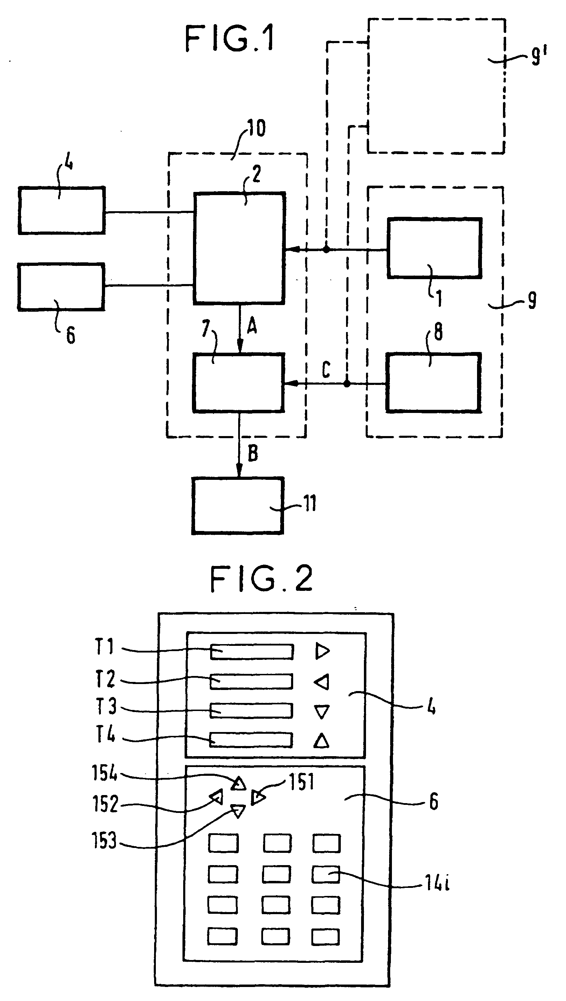

Le dispositif d'interface homme-machine illustré sur la figure 1 comporte:
- des moyens,1, pour indiquer au terminal les différentes options sélectionnables,
- des moyens,2, pour déterminer, de façon propre à chaque terminal, le mode de présentation à l'utilisateur de ces options sélectionnables, en vue de ladite sélection.

A titre d'exemple, les moyens 2 pour déterminer de façon propre au terminal le mode de présentation desdites options, en vue de ladite sélection, comportent des moyens, commandés par les moyens 1 pour indiquer au terminal les différentes options sélectionnables, et permettant, suivant des techniques connues, non redécrites ici, de déterminer un menu à afficher sur un écran 4, ainsi que le mode de désignation d'une option dans ce menu.Ce mode de désignation peut par exemple consister en une commande de la position d'un curseur sur cet écran, par l'utilisateur, au moyen d'un organe correspondant d'un clavier 6, ou encore en une activation d'une parmi plusieurs touches de fonction du clavier 6, associées repectivement à différentes positions d'un curseur sur l'écran.

Comme indiqué plus haut, le mode de présentation étant déterminé de façon propre à chaque terminal, d'autres modes de présentation sont donc possibles.

Dans l'exemple de réalisation illustré sur la figure 1, l'option sélectionnée étant signalée à l'extrémité distante avec laquelle ledit terminal est en communication, au moyen d'un signal particulier (notamment un signal multifréquences) émis par ce terminal et correspondant, suivant une convention donnée, à cette option, le dispositif d'interface homme-machine comporte en outre des moyens dits de conversion, 7, permettant de convertir le résultat de la sélection (noté A) ,en commande (notée B) d'émission par le terminal d'un signal correspondant à l'option sélectionnée, suivant ladite convention (notée C), dont le contenu est par ailleurs indiqué par des moyens 8 pour indiquer au terminal ladite convention.

Ces moyens de conversion 7 peuvent par exemple simplement consister en une mémoire destinée à stocker une table de correspondance constituée de l'ensemble des couples A-B formant la convention C, et qui, adressée par une option sélectionnée A, fournit la commande B correspondante.

Les moyens 8 pour indiquer au terminal ladite convention peuvent par exemple comporter des moyens pour recevoir un message dit ici de définition, incluant ladite convention.

Un tel message de définition peut être reçu par le terminal lors de la communication considérée,par exemple à la place du message d'aide utilisé suivant l'art antérieur tel que rappelé plus haut.A la différence d'un tel message d'aide, un tel message de définition est cependant de nature non compréhensible par l'utilisateur,mais par la machine, et sa réception est transparente pour cet utilisateur.

Suivant un autre exemple, correspondant plus particulièrement au cas d'un terminal radiotéléphonique du type GSM par exemple,un tel message de définition pourrait aussi,au lieu d'être reçu sur un canal dit dédié alloué pour une communication, être reçu sur un canal dit commun,c'est-à-dire être diffusé,en dehors d'une communication proprement dite, sur une fréquence dite fréquence balise commune à différents terminaux.

Suivant un autre exemple, les moyens 8 pour indiquer au terminal ladite convention peuvent comporter des moyens de stockage de données (notamment une carte à mémoire) destinés à être insérés dans le terminal pour permettre son utilisation, et permettant de stocker des données dites ici de définition, incluant ladite convention.Ces données de définition peuvent alors être lues à tout moment par le terminal.

Par ailleurs, les différentes options sélectionnables peuvent être indiquées au terminal de la même façon que ladite convention, auquel cas les moyens 1 et 8 peuvent être inclus dans un même ensemble.Le message de définition, ou, suivant le cas, les données de définition, incluent alors, outre ladite convention, les différentes options sélectionnables.Dans le cas de message de définition, cet ensemble est noté 9 et consiste en des moyens de réception prévus dans le terminal et permettant ici de recevoir ledit message de définition.Dans le cas de données de définition, cet ensemble est noté 9' et consiste en des moyens de stockage de données (notamment une carte à mémoire) permettant de stocker lesdites données de définition, cet ensemble 9' étant représenté en pointillés pour indiquer ces deux possibilités.

L'ensemble formé par les moyens 2 et 7 peut être inclus dans un ensemble plus général de traitement de données 10 (notamment un microprocesseur), communiquant, suivant des techniques de communication classiques:
- avec le clavier 6 et l'écran 4,
- avec les moyens 9 ou 9', suivant le cas,
- avec des moyens 11 de génération de signaux à émettre par le terminal (notamment des signaux multi-fréquences), correspondant aux différentes options sélectionnables.

L'exemple de mode de présentation illustré sur la figure 2 correspond au cas de sélection d'une option dans un menu présenté à l'écran,par activation d'une parmi plusieurs touches de fonction, en l'occurrence des touches de navigation,associées respectivement à différentes positions d'un curseur sur l'écran.

Sur la figure 2 est illustrée schématiquement la face avant d'un terminal téléphonique comportant un clavier noté également 6, et un écran noté également 4.Dans l'exemple illustré, le clavier 6 comporte, outre des touches de numérotation telles que 14i, permettant à l'utsisateur d'introduire la numérotation nécessaire à l'établissement des communications, des touches de navigation ,telles que 151 à 154, permettant classiquement à l'utilisateur de se déplacer dans un menu affiché sur l'écran 4, pour sélectionner par exemple un mode de fonctionnement particulier de ce terminal, ou un numéro de téléphone donné dans un répertoire....etc.

Dans l'exemple de fonctionnement des moyens de sélection suivant l'invention illustré sur cette figure,ces touches de navigation ont (en plus, ou au lieu, de la fonction précédente)une autre fonction, qui est d'être associées respectivement à différentes positions d'un curseur sur l'écran,et par là-même d'être aptes à désigner une option dans un menu, associée à cette position de curseur, ce menu étant en l'occurrence un menu formé de différentes options proposées à l'utilisateur en cours de communication lors de l'utilisation de services proposant de telles options.

Sur l'écran,le symbole correspondant à chacune de ces touches de navigation est alors associé à un bref texte décrivant chacune de ces options.

Par exemple,dans le cas d'accès à un service constitué par une messagerie vocale:
- le symbole représentant un déplacement vers la droite,associé à la touche 151, est associé à un texte,repéré T1,correspondant à l'option:"Avancer d'un message",
- le symbole représentant un déplacement vers la gauche,associé à la touche 152,est associé à un texte repéré T2, correspondant à l'option:"Reculer d'un message",
- le symbole représentant un déplacement vers le bas,associé à la touche 153,est associé à un texte repéré T3,correspondant à l'option:"Effacer un message",
- le symbole représentant un déplacement vers le haut,associé à la touche 154,est associé à un texte repéré T4, correspondant à l'option:"Mémoriser un message".

Dans cet exemple,ces différents symboles correspondant à ces différentes touches de navigation (notamment les symboles représentant un déplacement vers la droite ou vers la gauche,associés respectivement aux options Avancer ou Reculer d'un message) ont en outre l'avantage de pouvoir être associés de façon relativement naturelle, par l'utilisateur,aux différentes options correspondantes, ce qui permet encore d'améliorer l'ergonomie de l'ensemble, et donc le confort d'utilisation.

## Revendications

1. Dispositif d'interface homme-machine pour terminal téléphonique, pour la sélection d'options proposées à l'utilisateur de ce terminal lors de l'utilisation de services distants interactifs, dispositif comportant des moyens (1) pour indiquer au terminal les différentes options sélectionnables et des moyens (2) pour déterminer le mode de présentation à l'utilisateur de ces options, en vue de ladite sélection **caractérisé en ce que** lesdits moyens (2) pour déterminer ledit mode de présentation, sont propres à chaque terminal, et comportent des moyens pour déterminer un menu à afficher sur un écran (4) de ce terminal, ainsi que le mode de désignation d'une option dans ce menu ; l'option sélectionnée étant signalée à l'extrémité distante avec laquelle ledit terminal est en communication, au moyen d'un signal particulier émis par ce terminal et correspondant, suivant une convention donnée, à cette option, le dispositif comportant en outre des moyens (8) pour indiquer au terminal le contenu de ladite convention, et des moyens dits de conversion (7), permettant de convertir le résultat de ladite sélection en commande d'émission par le terminal du signal associé à l'option sélectionnée, suivant ladite convention.

2. Dispositif selon la revendication 1, **caractérisé en ce que** ledit mode de désignation consiste en l'activation d'une parmi plusieurs touches de fonction d'un clavier (6) de ce terminal, associées respectivement à différentes positions d'une curseur sur cet écran.

3. Dispositif selon la revendication 2, **caractérisé en ce que** lesdites touches de fonction sont des touches dites de navigation (151-154).

4. Dispositif selon la revendication 1,**caractérisé en ce que** lesdits moyens (8) pour indiquer au terminal le contenu de ladite convention comportent des moyens de réception d'un message dit de définition transmis par ladite extrémité distante.et incluant ladite convention.

5. Dispositif selon la revendication 1, **caractérisé en ce que** lesdits moyens (8) pour indiquer au terminal le contenu de ladite convention comportent des moyens de stockage de données (9'), notamment carte à mémoire, destinés à être insérés dans le terminal pour permettre son utilisation, et aptes à stocker des données dites de définition incluant ladite convention.

6. Dispositif selon l'une des revendications 1 à 5, **caractérisé en ce que** les moyens (1) pour indiquer au terminal les différentes options sélectionnables comportent des moyens (9) de réception d'un message dit de définition transmis par l'extrémité distante avec laquelle le terminal est en communication et incluant lesdites options sélectionnables.

7. Dispositif selon l'une des revendications 1 à 5, **caractérisé en ce que** les moyens (1) pour indiquer au terminal les différentes options sélectionnables comportent des moyens (9') de stockage de données dites de définition, notamment carte à mémoire, destinés à être insérés dans le terminal pour permettre son utilisation, ces données de définition incluant lesdites options sélectionnables.

## Claims

1. A man-machine interface device for a telephone terminal for selecting options offered to the user of said terminal when using remote interactive services, including means (1) for indicating to the terminal the various options that can be selected and means (2) for determining the mode of presentation of said options to the user for the purpose of making said selection **characterized in that** said means (2) for determining said mode of presentation are specific to each terminal and include means for determining a menu to be displayed on a screen (4) of said terminal and the mode of designation of an option from said menu; the selected option being signalled to remote terminal equipment with which said terminal is communicating by means of a particular signal sent by said terminal and corresponding to that option in accordance with a given convention the device further including means (8) for indicating to the terminal the content of said convention and converter means (7) for converting the result of said selection into a command for sending by the terminal of the signal associated with the selected option in accordance with said convention.

2. A device according to claim 1 **characterized in that** said mode of designation consists in the activation of one of a plurality of function keys of a keypad (6) of said terminal respectively associated with different positions of a cursor on said screen.

3. A device according to claim 2 **characterized in that** said function keys are navigation keys (151-154).

4. A device according to claim 1 **characterized in that** said means (8) for indicating to the terminal the content of said convention include means for receiving a definition message transmitted by said remote terminal equipment and including said convention.

5. A device according to claim 1 **characterized in that** said means (8) for indicating to the terminal the content of said convention include data storage means (9') such as a smart card adapted to be inserted into the terminal to enable it to be used and adapted to store definition data including said convention.

6. A device according to any one of claims 1 to 5 **characterized in that** the means (1) for indicating to the terminal the various options that can be selected include means (9) for receiving a definition message transmitted by remote terminal equipment with which the terminal is communicating and including said options that can be selected.

7. A device according to any one of claims 1 to 5 **characterized in that** the means (1) for indicating to the terminal the various options that can be selected include definition data storage means (9') such as a smart card adapted to be inserted into the terminal to enable it to be used, said definition data including said options that can be selected.

## Patentansprüche

1. Benutzerschnittstelle für ein Telefonendgerät für die Auswahl von Optionen, die dem Benutzer dieses Endgerätes während der Nutzung entfernter, interaktiver Dienste vorgeschlagen werden, wobei diese Schnittstelle über Mittel (1) zur Angabe der verschiedenen auswählbaren Optionen am Endgerät sowie über Mittel (2) zur Bestimmung der Darstellungsweise dieser Optionen gegenüber dem Benutzer im Hinblick auf die genannte Auswahl verfügt, **dadurch gekennzeichnet, dass** die genannten Mittel (2) zur Bestimmung der genannten Darstellungsweise spezifisch für jedes Endgerät sind und über Mittel zur Bestimmung eines auf einem Display (4) dieses Endgerätes anzuzeigenden Menüs sowie der Art der Bezeichnung einer Option in diesem Menü verfügen; die ausgewählte Option wird dem anderen Ende, mit dem das genannte Endgerät verbunden ist, mittels eines von diesem Endgerät ausgesandten, spezifischen Signals übermittelt, das gemäß einer gegebenen Übereinkunft dieser Option entspricht, wobei die Schnittstelle außerdem über Mittel (8) zur Angabe des Inhalts der genannten Übereinkunft am Endgerät sowie über so genannte Konvertierungsmittel (7) verfügt, mit denen das Ergebnis der genannten Auswahl gemäß der genannten Übereinkunft in einen Befehl zum Aussenden des der ausgewählten Option zugeordneten Signals durch das Endgerät konvertiert werden kann.

2. Schnittstelle gemäß Anspruch 1, **dadurch gekennzeichnet, dass** die genannte Art der Bezeichnung in der Aktivierung einer von mehreren Funktionstasten einer Tastatur (6) dieses Endgerätes besteht, die jeweils verschiedenen Positionen eines Cursors auf diesem Display zugeordnet sind.

3. Schnittstelle gemäß Anspruch 2, **dadurch gekennzeichnet, dass** die genannten Funktionstasten so genannte Navigationstasten (151-154) sind.

4. Schnittstelle gemäß Anspruch 1, **dadurch gekennzeichnet, dass** die genannten Mittel (8) zur Angabe des Inhalts der genannten Übereinkunft am Endgerät über Mittel zum Empfang einer so genannten Definitionsmitteilung verfügen, die vom anderen Ende übermittelt wird und die die genannte Übereinkunft enthält.

5. Schnittstelle gemäß Anspruch 1, **dadurch gekennzeichnet, dass** die genannten Mittel (8) zur Angabe des Inhalts der genannten Übereinkunft am Endgerät über Mittel zur Speicherung von Daten (9'), und zwar insbesondere eine Speicherkarte, verfügen, die in das Endgerät eingeführt werden müssen, um dessen Benutzung zu ermöglichen, und mit denen so genannte Definitionsdaten einschließlich der genannten Übereinkunft gespeichert werden können.

6. Schnittstelle gemäß einem der Ansprüche 1 bis 5, **dadurch gekennzeichnet, dass** die Mittel (1) zur Angabe der verschiedenen auswählbaren Optionen am Endgerät über Mittel (9) zum Empfang einer so genannten Definitionsmitteilung verfügen, die vom anderen Ende, mit dem das Endgerät verbunden ist, übermittelt wird und die die genannten auswählbaren Optionen enthält.

7. Schnittstelle gemäß einem der Ansprüche 1 bis 5, **dadurch gekennzeichnet, dass** die Mittel (1) zur Angabe der verschiedenen auswählbaren Optionen am Endgerät über Mittel (9') zur Speicherung von so genannten Definitionsdaten, und zwar insbesondere eine Speicherkarte, verfügen, die in das Endgerät eingeführt werden müssen, um dessen Benutzung zu ermöglichen, wobei diese Definitionsdaten die genannten auswählbaren Optionen enthalten.
